# EUROPÄISCHE PATENTSCHRIFT

(11) **EP 1 328 898 B1**
(45) Veröffentlichungstag und Bekanntmachung des Hinweises auf die Patenterteilung: **22.12.2004**
(21) Anmeldenummer: 01987931.1
(22) Anmeldetag: 22.10.2001
(51) Int. Cl.: G06K 19/00, B42D 15/00, B42D 15/10

(54) **VERFAHREN ZUM ÜBERPRÜFEN EINES ALS SICHERHEITSMERKMAL DIENENDEN PERFORATIONSMUSTERS**
METHOD FOR VERIFYING A PERFORATION PATTERN SERVING AS A SECURITY CHARACTERISTIC
PROCEDE DE VERIFICATION D'UN MODELE DE PERFORATION SERVANT DE CARACTERISTIQUE DE SECURITE

(30) Priorität: 20.10.2000 DE 10052184
(43) Veröffentlichungstag der Anmeldung: 23.07.2003
(73) Patentinhaber: DATACARD CORPORATION, Minnetonka, MN 55443 (US)
(72) Erfinder: KREUTER, Rüdiger, 64297 Darmstadt (DE)
(74) Vertreter: Alber, Norbert, Dipl.-Ing.
(86) Internationale Anmeldenummer: PCT/EP2001/012186
(87) Internationale Veröffentlichungsnummer: WO 2002/033652

(56) Entgegenhaltungen:
- WO-A-00/43216
- WO-A-95/26274
- WO-A-97/18092
- WO-A-98/19869

## Beschreibung

### I. Anwendungsgebiet

Die Erfindung betrifft ein Verfahren zum Überprüfen eines Sicherheitsmerkmales.

### II. Technischer Hintergrund

Aus WO 98/19869 ist es bekannt, als Sicherheitsmerkmal ein Perforationsmuster in Dokumenten wie Geldscheinen, Ausweisen, Plastikkarten, beispielsweise Zahlungskarten, einzubringen. Dabei wird eine Vielzahl von Perforationen nebeneinander flächig aufgebracht.

Die WO 97/18092 beschreibt ein Sicherheitsmerkmal für Sicherheitsdokument, das aus einer Vielzahl von mit Laser eingebrannten Löchern besteht, die mit bloßem Auge nicht sichtbar sind und nur im Gegenlicht erkannt werden können.

Das in der WO 95/26274 beschriebene Sicherheitsmerkmal besteht hingegen aus mit einem Laser erzeugten feinen Kanälen oder Perforationen, die mit bloßem Auge zumindest teilweise erkennbar sind.

In dem Verfahren aus der WO 98/19869 wird versucht, durch Steuerung der Durchmesser der Perforationen, also der Mündungen der Perforationen auf einer der Außenseiten, bzw. durch die Abstände zwischen den Mündungen, also der Verteilung der Mündungen auf der Oberfläche, ein flächiges Bild zu erzeugen. Gemäß der WO 00/43216 ist dies auch dann möglich, wenn es sich um Sacklöcher handelt, die die Betrachtungsseite gar nicht erreichen.

In der Praxis wird diese Methode dadurch realisiert, daß von der Rückseite des Dokumentes, also des Substrates, her in regelmäßigen oder unregelmäßigen Rasterungen nebeneinander Perforationen mittels Laserlicht eingebrannt werden.

Dementsprechend sind die Mündungen der Perforationen auf dieser Rückseite alle gleich groß, nicht jedoch die Mündungen der entsprechenden Perforationen auf der Vorderseite.

Dementsprechend kann aufgrund der Variation der Größe der Mündungen auf der Vorderseite bei Betrachtung der Vorderseite im Gegenlicht, zum Beispiel unter Tageslicht, ein Bild mit Grauabstufungen erkannt werden.

Bei diesem Bild kann es sich um Ziffern, Buchstaben, Symbole oder Abbildungen, beispielsweise eines Gesichtes, handeln.

Die unterschiedlichen Durchmesser der Mündungen auf der Vorderseite werden bewirkt, indem die Beaufschlagungsdauer des Substrates mittels Laserlicht variiert wird in Abhängigkeit des gewünschten Mündungsdurchmessers.

Obwohl ein Laserstrahl sehr gut gebündelt ist, bewirkt er beim zunehmenden Einbrennen von der Rückseite her in ein Substrat letztendlich ein zumindest im tiefsten Bereich konisches Loch, bedingt durch die Gauss'sche Verteilung der Energie innerhalb des Querschnittes des Laserstrahles und zumindest solange, wie die Beaufschlagungsdauer nach dem Durchstossen des Substrates nicht noch wesentlich verlängert wird. Diese Konizität kann durch geeignete, dem Auftreffpunkt vorgeschaltete Optiken zur Formung des Laserstrahles verstärkt oder abgeschwächt werden.

Denn nach dem Durchstoßen des Substrates wird der Brennkanal auf volle Dicke des Laserstahls ausgeweitet, und erst nach dem dies erreicht ist, ist die Mündung auf der Austrittsseite annähernd gleich groß wie in die Mündung auf der Eintrittsseite.

Da dies zur Beeinflussung der Größe der Mündungen auf der Austrittsseite, also der Vorderseite des Dokumentes, gerade nicht gewünscht wird, sind die Durchgangsöffnungen durch das Substrat im Längsschnitt betrachtet leicht konisch.

Zusätzlich werden aufgrund der Wärmeentwicklung durch das Laserlicht die Ränder der Mündungen, insbesondere auf der Austrittsseite des Laserlichts, gerundet, zumindest sofern es sich um relativ weiche Materialien wie Kunststoffe handelt.

Aufgrund der konischen Form der Löcher, aus denen das Perforationsmuster besteht, kann im Gegensatz zur Behauptung in der genannten Patentanmeldung das beabsichtigte Bild bei Betrachtung im Gegenlicht erkannt werden, unabhängig davon, von welcher Seite aus das Substrat betrachtet wird.

Dies rührt daher her, daß auch bei Betrachtung von der Rückseite her, auf der ja die Mündungen regelmäßig oder unregelmäßig nebeneinander angeordnet sind und gleichen Durchmesser besitzen, die Menge dessen hindurch tretenden Lichtes dennoch durch die Größe der Mündungen auf der gegenüberliegenden Seite, der Vorderseite, bestimmt wird.

Im Ergebnis kann daher die beabsichtigte Bildwirkung bei Betrachtung von beiden Seiten her erkannt werden. Ein derartiges Sicherheitsmerkmal ist jedoch relativ leicht zu umgehen: so könnte beispielsweise ein entsprechendes Perforationsmuster mit Hilfe einer Art Nähmaschine, beispielsweise durch Verwendung zweier unterschiedlich dicker Nadeln, erzeugt werden, oder auch mittels ein und derselben, wenigstens im vorderen Bereich konisch ausgebildeten, Nadeln, und gleichzeitiger Steuerung der Eintauchtiefe der Nadel.

### III. Darstellung der Erfindung

### a) Technische Aufgabe

Es ist deshalb die Aufgabe der vorliegenden Erfindung, ein Verfahren zur Überprüfung der Echtheit eines solchen Sicherheitsmerkmals zur Verfügung zu stellen.

### b) Lösung der Aufgabe

Diese Aufgabe wird durch die Merkmale des Anspruchs 1 gelöst. Vorteilhafte Ausführungsformen ergeben sich aus den Unteransprüchen.

Durch die - gegebenenfalls zusätzliche - Überprüfung des Perforationsmusters unter Auflichtbestrahlung mit Licht einer definierten Wellenlänge, beispielsweise UV-Licht, kann eine völlig unterschiedliche Bildwirkung auf der Vorderseite und Rückseite mit nur einem sehr simplen Hilfsmittel, beispielsweise einer UV-Lampe, festgestellt werden:
Während auf der Vorderseite die gewünschte Bildwirkung klar erkennbar ist, in dem die insgesamt reflektierende Fläche des Perforationsmusters bzw. Sacklochmusters gemäß der Grauabstufungen des Bildes unterschiedlich stark reflektiert, ist von der Rückseite her nur eine gleichmäßig stark reflektierende Fläche über den Bereich des gesamten Perforationsmusters zu erkennen.

Dieser Effekt ist mit gebohrten Perforationen nicht erzielbar.

Diese unterschiedlich starke Reflexion beruht auf einer Interferenz des verwendeten UV-Lichtes, bedingt durch Reflexionen insbesondere im Randbereich der Mündungen sowie in dem Umfangsbereich am Beginn der Durchtrittsöffnungen des Perforationsmusters.

Für die Überprüfung des Sicherheitsmerkmals wird in der Regel als erste Sicherheitsstufe die Durchlichtüberprüfung mittels Tageslicht durchgeführt.

Sollte jedoch als erste Überprüfung direkt die Auflichtbetrachtung mittels eines Lichtes definierter Wellenlänge durchgeführt werden, so empfiehlt sich, die Durchlichtbetrachtung mittels Tageslichts zusätzlich von beiden Seiten des Dokumentes aus durchzuführen, da durch die Kombination beider Überprüfungen ein erhöhtes Maß an Sicherheit gewonnen werden kann.

In beiden Fällen erfolgte die Betrachtung mit dem bloßen Auge, so daß hierfür keinerlei Hilfsmittel, außer der Aufstrahlung des Lichtes definierter Wellenlänge, also beispielsweise des UV-Lichts, benötigt wird.

### c) Ausführungsbeispiele

Eine Ausführungsform gemäß der Erfindung ist im folgenden anhand der Figuren beispielhaft näher beschrieben. Es zeigen:
- Fig. 1:: eine Querschnittsdarstellung durch das Substrat, und
- Fig. 2:: eine Aufsicht auf das mit UV Licht beleuchtete Substrat.

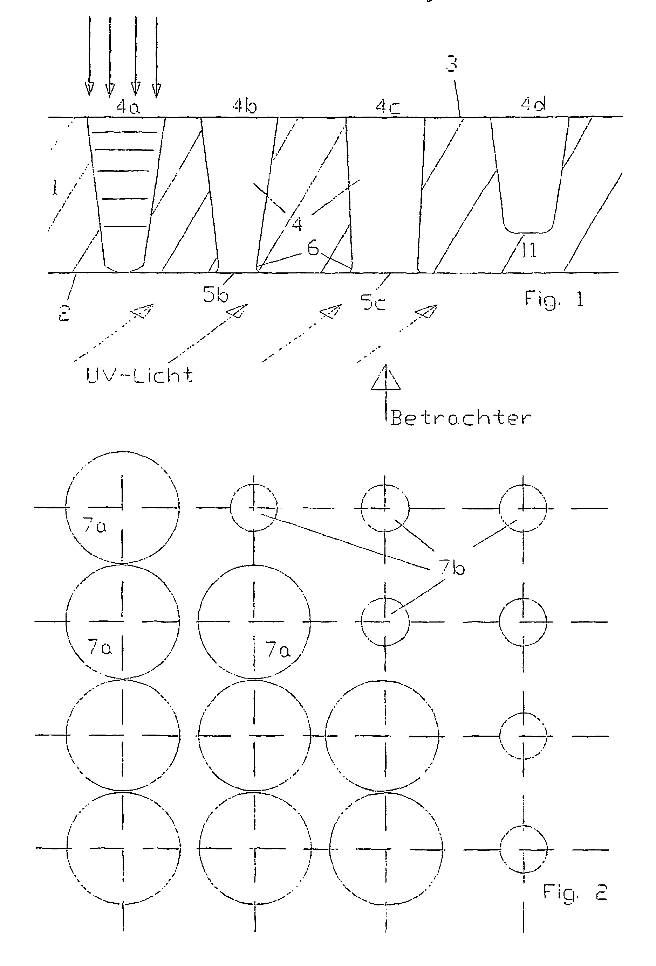

Figur 1 zeigt einen Querschnitt durch das Substrat 1, und zwar entlang der Längsachsen derer Löcher 4 a, b, c.., die die Perforation 4 bilden.

Die Löcher 4 sind allesamt von der oben liegenden Rückseite 3 aus in das Substrat 1 eingebracht. Dabei zeigt Loch 4 a, wie mit fortschreitender Beaufschlagungszeit durch einen Laserstrahl ein Sackloch entsteht, welches zumindest im seinem jeweiligen tiefsten Bereich konisch gebildet ist, aufgrund der Verteilung der Energie innerhalb des Laserstrahles.

Entsprechend ist beim Durchstoßen einer der Rückseite 3 gegenüberliegenden Vorderseite 2 die Mündung auf dieser Austrittsseite wesentlich kleiner im Durchmesser als auf der Eintrittsseite

Wie das vollständig das Substrat 1 durchdringende Loch 4 b zeigt, können auf diese Weise Durchgangslöcher geschaffen werden, deren Mündung, zum Beispiel 5 b, auf derer Austrittsseite definiert kleiner als auf der Eintrittsseite des Loches sind.

Wird nach einer solchen, soeben erfolgten Durchtrennung der Austrittsseite, also der Vorderseite 2, die Beaufschlagung mit Laserlicht länger fortgesetzt, so wird dadurch die Mündung auf der Austrittsseite immer weiter aufgeweitet, bis sie - wie beim Loch 4 c dargestellt - auf der Austrittsseite einen Durchmesser aufweist, der praktisch identisch ist mit dem Durchmesser der Mündung auf der Eintrittsseite.

Anhand des Loches 4 d ist dargestellt, daß auf die gleiche Art und Weise, lediglich mit verringerter Beaufschlagungszeit gegenüber der Lösung beim Loch zum Beispiel 4 b, also bis zum Durchstoßen derer gegenüberliegenden Austrittsseite, auch Sacklöcher erzeugt werden können.

Dabei besitzt der Boden dieses Sackloches 4 d einen wiederum deutlich geringeren Querschnitt als die Mündung an der Eintrittsseite dieses Loches 4 d.

Figur 1 zeigt weiterhin, wie bei Beleuchtung dieser Vorderseite 2 mit UV-Licht 9, dessen Auftreffwinkel im wesentlichen freibleibend gewählt werden kann, vorzugsweise jedoch einen Winkel zur Vorderseite 2 von mehr als 10°, vorzugsweise von mehr als 40°, besitzen sollte, insbesondere an den Rändern 6 der Mündungen 5, aber auch an den Innenumfangswänden der Löcher 4 im Bereich nahe der Mündungen reflektiert und dabei auch diffus gestreut wird.

Dementsprechend wird bei Betrachtung dieser Vorderseite 2 während der Beleuchtung mit UV-Licht 9 von einem Betrachter jede Mündung 5 b, c als Leuchtfleck 7 a, b wahrgenommen, dessen Durchmesser mit dem Durchmesser der jeweiligen Mündung korrespondiert.

Dabei erscheint der Leuchtfleck 7 über seine ganze Fläche leuchtend, obwohl die Mündung 5 einen Ring darstellt. Der Durchmesser des Leuchtfleckes ist insbesondere geringfügig größer als der Durchmesser der jeweiligen Mündung, was auf die diffuse Abstrahlung des UV-Lichts vor allem in den Bereichen des Randes 6 zurückzuführen ist.

Wie Figur 2 zeigt, lassen sich durch flächenartigen und, meist regelmäßige entlang eines Rasters 8 angeordnete, aber auch unregelmäßig verteilte, Leuchtflecke Flächenwirkungen erzielen, indem solche Flächen, die einen höheren Anteil von leuchtenden Flächen aufweisen als andere Flächen, im Kontrast zu diesen anderen Flächen in stehen.

Bei entlang einem regelmäßigen Raster 8 angeordneten Leuchtflecken wird beispielsweise diese Wirkung erzielt, indem hell leuchtende Flächen erzielt werden durch Anordnung großer Leuchtflecke auf den Kreuzungen des Rasters 8.

Bei Anordnung kleinerer Leuchtflecke 7 b auf den Kreuzungspunkten des Rasters 8 ist die so bedeckte Fläche weniger stark leuchtend. Auf diese Art und Weise können durch nur zwei unterschiedlich große Mündungen 5 b, 5 c und damit unterschiedlich große Leuchtflecke 7 a, b bereits Bilder erzeugt werden, deren Kontrast dem eines schwarz-weiß-Fotos entspricht.

Da die Größen der Mündungen in mehr als zwei Stufen variiert werden können, sind auch Graustufendarstellungen möglich.

Weiterhin ist es auch möglich, Sacklöcher wie in Loch 4 b, die das Substrat nicht bis zur betrachteten Vorderseite 2 b durchdringen, dennoch mittels UV-Licht erkennbar zu machen, indem die verbleibende Restdicke 11 ausreichend dünn ist, um vorm UV-Licht durchdrungen zu werden.

### BEZUGSZEICHENLISTE

- 1: Substrat
- 2: Vorderseite
- 3: Rückseite
- 4: Perforation
- 5: Mündung
- 6: Rand
- 7: Leuchtfleck
- 8: Raster
- 9: UV-Licht
- 11: Restdicke

## Patentansprüche

1. Verfahren zum Überprüfen eines als Sicherheitsmerkmal dienenden Perforationsmusters (4) im Substrat (1) eines, insbesondere kartenförmigen, Dokuments, wobei
• die Mündungen des Perforationsmusters (4) auf der Rückseite (3) des Substrats (1) alle gleich groß und insbesondere regelmäßig zueinander angeordnet sind,
• die Mündungen des Perforationsmusters (4) auf der Vorderseite (2) des Substrats (1) unterschiedlich groß sind und
• das Perforationsmuster (4) bei Betrachtung im Gegenlicht des Tageslichts in dem Substrat (1) eine Bildinformation erkennen läßt,
wobei das Überprüfen derart erfolgt, dass sowohl die Vorderseite (2) als auch die Rückseite (3) des Substrates (1) im Bereich des Perforationsmusters (4) unter Auflicht (9) mit Licht einer definierten Wellenlänge betrachtet wird, wobei das Sicherheitsmerkmal als echt erachtet wird, wenn
• sich dabei auf der Vorderseite (2) das dem Perforationsmuster (4) inhärente Bild zeigt, während
• auf der Rückseite (3) nur unspezifiziert eine dem Bereich des Perforationsmusters (4) entsprechende Fläche hervortritt.

2. Verfahren nach einem der vorhergehenden Ansprüche,
**dadurch gekennzeichnet, dass**
die Betrachtung im Gegenlicht des Tageslichts sowohl von der Vorderseite (2) als auch von der Rückseite (3) des Substrates (1) her durchgeführt wird und in beiden Fällen die Bildinformation sichtbar sein muß.

3. Verfahren nach einem der vorhergehenden Ansprüche,
**dadurch gekennzeichnet, dass**
die Betrachtung sowohl im Gegenlicht des Tageslichts und/oder unter Auflicht (9) mit Licht einer definierten Wellenlänge mit freiem Auge erfolgt.

4. Verfahren nach einem der vorhergehenden Ansprüche,
**dadurch gekennzeichnet, dass**
die Wellenlänge des Auflichts (9) zwischen 10 nm und 500 nm, insbesondere zwischen 100 nm und 400 nm liegt und insbesondere breitbandiges UV-Licht ist.

5. Verfahren nach einem der vorhergehenden Ansprüche,
**dadurch gekennzeichnet, dass**
die Durchmesser der Mündungen auf der Vorderseite (2) zwischen 20µm und 140µm liegen.

6. Verfahren nach einem der vorhergehenden Ansprüche,
**dadurch gekennzeichnet, dass**
die Perforationen (4) mittels Laserlicht eingebrannt wurden.

7. Verfahren nach einem der vorhergehenden Ansprüche,
**dadurch gekennzeichnet, dass**
das Substrat (1) ein Kunststoff, insbesondere ein Duroplast, insbesondere Polycarbonat, ist.

8. Verfahren nach einem der vorhergehenden Ansprüche,
**dadurch gekennzeichnet, dass**
die Dicke des Substrates (1) zwischen 0,1 und 1,0 Millimeter beträgt.

9. Verfahren nach einem der vorhergehenden Ansprüche,
**dadurch gekennzeichnet, dass**
die Wellenlänge des zum Einbrennen verwendeten Laserlichts zwischen 6 µm und 12 µm beträgt.

10. Verfahren nach einem der vorhergehenden Ansprüche,
**dadurch gekennzeichnet, dass**
die Durchmesser der Mündungen auf der Vorderseite (2) zwischen dem 100-fachen und dem 500-fachen der Wellenlänge des verwendeten Auflichts (9) betragen.

11. Verfahren nach einem der vorhergehenden Ansprüche,
**dadurch gekennzeichnet, dass**
die Dicke des Substrates (1) mindestens das 300-tausendfache der Wellenlänge des verwendeten Auflichts (9) beträgt.

12. Verfahren nach einem der vorhergehenden Ansprüche,
**dadurch gekennzeichnet, dass**
die Wellenlänge des zum Einbrennen verwendeten Laserlichtes das 10-fache bis 70-fache, insbesondere das 20-fache bis 40-fache, der Wellenlänge des verwendeten Auflichts (9) beträgt.

## Claims

1. A method of checking a perforation pattern (4) which serves as a security feature in the substrate (1) of a document in particular in card form, whereby
- the mouth openings of the perforation pattern (4) on the rear side (3) of the substrate (1) are all of equal size and in particular are arranged in regular relationship with each other,
- the mouth openings of the perforation pattern (4) on the front side (2) of the substrate (1) are of different sizes, and
- the perforation pattern (4) in daylight back-lighting shows an image information,
whereby the checking takes place in such a manner that both the front side (2) and also the rear side (3) of the substrate (1) is viewed in the region of the perforation pattern (4) under incident light (9) with light of a defined wavelength, whereby the security feature is considered genuinely, when
- in that case the image which is inherent to the perforation pattern (4) shows on the front side (2) while
- on the rear side (3) thereof an area corresponding to the region of the perforation pattern (4) steps out only in an unspecified manner.

2. A method as set forth in one of the preceding claims **characterized in that** viewing in daylight back-lighting is effected both from the front side (2) and also from the rear side (3) of the substrate (1) and the image information must be visible in both cases.

3. A method as set forth in one of the preceding claims **characterized in that** viewing is effected both in daylight back-lighting and/or under incident light (9) with light of a defined wavelength with the naked eye.

4. A method as set forth in one of the preceding claims **characterized in that** the wavelength of the incident light (9) is between 10 nm and 500 nm, in particular between 100 nm and 400 nm and is in particular wide-band UV-light.

5. A method as set forth in one of the preceding claims **characterized in that** the diameters of the mouth openings on the front side (2) are between 20 µm and 140 µm.

6. A method as set forth in one of the preceding claims **characterized in that** the perforations (4) were burnt in by means of laser light.

7. A method as set forth in one of the preceding claims **characterized in that** the substrate (1) is a plastic material, in particular a thermosetting plastic material, in particular polycarbonate.

8. A method as set forth in one of the preceding claims **characterized in that** the thickness of the substrate (1) is between 0.1 and 1.0 millimeter.

9. A method as set forth in one of the preceding claims **characterized in that** the wavelength of the laser light used for burning in the perforations is between 6 µm and 12 µm.

10. A method as set forth in one of the preceding claims **characterized in that** the diameters of the mouth openings on the front side (2) are between 100 times and 500 times the wavelength of the incident light (9) used.

11. A method as set forth in one of the preceding claims **characterized in that** the thickness of the substrate (1) is at least 300 thousand times the wavelength of the incident light (9) used.

12. A method as set forth in one of the preceding claims **characterized in that** the wavelength of the laser light used for burning in the perforations is between 10 times and 70 times, in particular between 20 times and 40 times, the wavelength of the incident light (9) used.

## Revendications

1. Procédé de vérification d'un modèle de perforation (4) servant de caractéristique de sécurité dans le substratum (1) d'un document, spécialement en forme de carte, où
- sur la partie postérieure (3) du substratum (1), les bouches du modèle de perforation (4) sont toutes de la même grandeur et spécialement sont disposées régulièrement l'une par rapport à l'autre,
- sur la partie frontale (2) du substratum (1) les bouches du modèle de perforation (4) sont de grandeur différente et
- le modèle de perforation (4) observé en contre-lumière à la lumière du jour, laisse s'observer une information d'image dans le substratum (1), où la vérification se déroule de sorte que, tant la partie frontale (2) que la partie postérieure (3) du substratum, dans la zone du modèle de perforation (4) soit observée sous la lumière directe (9) avec lumière d'une certaine longueur d'onde où la caractéristique de sécurité est considérée authentique si
- ici, sur la partie frontale (2) on observe l'image inhérente du modèle de perforation (4), pendant que,
- sur la partie postérieure (3), on fait remarquer seulement une surface non-spécifiée correspondant à la zone du modèle de perforation (4).

2. Procédé selon l'une des revendications antérieures, **caractérisé en ce que**, l'observation en contre-lumière à la lumière du jour se réalise tant du côté de la partie frontale (2) que du côté de la partie postérieure (3) du substratum (1) et dans tous les deux cas l'information d'image doit être visible.

3. Procédé selon l'une des revendications antérieures, **caractérisé en ce que**, l'observation en contre-lumière à la lumière du jour et/ou sous la lumière directe (9), avec une lumière d'une certaine longueur d'onde, a lieu à l'oeil nu.

4. Procédé selon l'une des revendications antérieures, **caractérisé en ce que**, la longueur d'onde de la lumière directe (9) est entre 10 nm et 500 nm, spécialement entre 100 nm et 400 nm et c'est une lumière UV de large bande.

5. Procédé selon l'une des revendications antérieures, **caractérisé en ce que**, sur la partie frontale (2) les diamètres des bouches sont entre 20 µm et 140 µm.

6. Procédé selon l'une des revendications antérieures, **caractérisé en ce que**, les perforations (4) sont réalisées par brûlage à lumière laser.

7. Procédé selon l'une des revendications antérieures, **caractérisé en ce que**, le substratum (1) est en matière plastique, spécialement duroplast, spécialement polycarbonate.

8. Procédé selon l'une des revendications antérieures, **caractérisé en ce que**, l'épaisseur du substratum (1) est entre 0,1 et 1,0 millimètres.

9. Procédé selon l'une des revendications antérieures, **caractérisé en ce que**, la longueur d'onde de la lumière laser utilisée pour brûlage est entre 6 µm et 12 µm.

10. Procédé selon l'une des revendications antérieures, **caractérisé en ce que**, sur la partie frontale (2) les diamètres des bouches sont de, entre 100 fois et 500 fois la longueur d'onde de la lumière directe (9) utilisée.

11. Procédé selon l'une des revendications antérieures, **caractérisé en ce que**, l'épaisseur du substratum (1) est au moins de 300 milles fois la longueur d'onde de la lumière directe (9) utilisée.

12. Procédé selon l'une des revendications antérieures, **caractérisé en ce que**, la longueur d'onde de la lumière laser utilisée pour brûlage est de 10 fois à 70 fois, spécialement de 20 fois à 40 fois la longueur d'onde de la lumière directe (9) utilisée.
